# EUROPÄISCHE PATENTSCHRIFT

(11) **EP 0 482 289 B1**
(45) Veröffentlichungstag und Bekanntmachung des Hinweises auf die Patenterteilung: **01.03.1995**
(21) Anmeldenummer: 91108228.7
(22) Anmeldetag: 22.05.1991
(51) Int. Cl.: G01G 19/07

(54) **Anordnung mindestens eines Sensors an dem Fahrwerk eines Flugzeugs zur Messung dessen Gewichts und Schwerpunktlage**
Mounting of at least one sensor on a landing gear of an aeroplane for measuring the weight and the centre of gravity of the aeroplane
Montage d'un moins un capteur sur le atterisseur d'un avion pour mesurer le poid et le centre de gravitation d'avion

(30) Priorität: 20.10.1990 DE 4033429; 18.04.1991 DE 4112675
(43) Veröffentlichungstag der Anmeldung: 29.04.1992
(73) Patentinhaber: VDO Luftfahrtgeräte Werk GmbH, D-60423 Frankfurt (DE)
(72) Erfinder: Patzig, Hans-Norbert, W-6380 Bad Homburg (DE); Schult, Klaus, W-6000 Frankfurt/Main 56 (DE)
(74) Vertreter: Gornott, Dietmar, Dipl.-Ing.

(56) Entgegenhaltungen:
- EP-A- 0 026 446
- EP-A- 0 054 453
- EP-A- 0 232 535
- FR-A- 2 564 582

## Beschreibung

Die Erfindung betrifft eine Anordnung mindestens eines Sensors an dem Fahrwerk eines Flugzeugs zur Messung dessen Gewichts und Schwerpunktlage nach dem Oberbegriff des Anspruchs 1.

Bei derartigen aus der Praxis bekannten Anordnungen werden insbesondere induktive Sensoren der Bauart mit zwei in Serie geschalteten Spulen vorgesehen, die übereinander mit einer gemeinsamen Mittellinie in einem ersten Sensorteil angeordnet sind, sowie mit in einer in den Spulen beweglichen Zunge aus ferromagnetischem Material, die Bestandteil eines zweiten Sensorteils ist. Der erste und der zweite Sensorteil werden jeweils an einem Ansatz eines Paars Ansätzen angebracht, die an der Meßstelle von einer Achse oder einem Drehbalken eines Flugzeugfahrwerks hervorstehen. Die seriell geschalteten Spulen des Sensors wirken als induktiver Spannungsteiler und geben ein Signal ab, wenn die Höhenlage der Zunge gegenüber den Spulen versetzt wird. Im Idealfall mißt der Sensor nur die durch die in das Fahrwerk eingeleitete Last hervorgerufene Scherung der Achse oder des Drehbalkens im Bereich der Meßstelle, an der der Sensor angebracht ist.

Zu den Fehlern, die das Meßergebnis von dem Idealfall abweichen lassen, gehört ein auf den Be- und Entladeeffekt zurückgehender Fehler. Er beruht darauf, daß beim Be- und Entladen eines Flugzeugs die Durchbiegung der tragenden Teile in den Fahrwerken davon abhängt, ob das Flugzeug nach dem Be- oder Entladevorgang bewegt - gerollt - wurde oder nicht. Bevor das beladene Flugzeug bewegt wird, folgt eine Lasteinleitung näher einem inneren Radlager als einem äußerem Radlager infolge der Einwirkung einer Seitenkraft, die an den Reifen angreift und die Spur der Achse zu verbreitern sucht. Nach einer Rollbewegung des Flugzeugs verschwindet die Seitenkraft infolge der geänderten Reibverhältnisse zum Boden, die eine Spurveränderung zulassen. Die vertikale Lasteinleitung aufgrund des Gewichts erfolgt dann mittig zwischen dem inneren und dem äußeren Radlager. Zur Beschreibung des als Be- oder Entladeeffekt bekannten Fehlers kann die voranstehend beschriebene Wanderung der Lasteinleitung zerlegt gedacht werden in eine feste Lasteinleitung mittig zwischen den Radlagern sowie in ein sich änderndes Biegemoment bzw. Drehmoment in Abhängigkeit von der Spuränderung. Diese Momente werden an den Radlagern in die Achse eingeleitet. - Die gewichtsbedingte feste Lasteinleitung ruft außer einer Biegung der Achse eine Scherung hervor, die gemessen werden soll. Entsprechend der Scherung erfährt der Sensor eine dem Gewicht proportionale Auslenkung. Das infolge der Be- oder Entladung entstehende Drehmoment oder Biegemoment verursacht eine zusätzliche Biegung, die sich der Biegung aus der festen Lasteinleitung überlagert und nicht unmittelbar von der Last herrührt, sondern von der Seitenkraft am Reifen.- Bei der in der Praxis üblichen konischen Ausbildung der Achse ändert sich deren Festigkeit von der Mitte nach außen zum Rad hin abnehmend. Dies bewirkt, daß die Krümmung der Biegelinie an einem inneren Sensorbefestigungspunkt, der nahe dem Mittelpunkt liegt, geringer ist als die Krümmung am äußeren Sensorbefestigungspunkt, weil die Achse weiter innen eine höhere Festigkeit aufweist als außen. Es wird an dieser Stelle bemerkt, daß der Beladeeffekt abhängig ist von der Größe der Beladung und mit dieser zunimmt. Unter Beladung wird dabei auch das Betanken des Flugzeugs verstanden.

Der vorliegenden Erfindung liegt die Aufgabe zugrunde, eine Anordnung eines Sensors an dem Fahrwerk eines Flugzeugs zur Messung dessen Gewichts und Schwerpunktlage der eingangs genannten Gattung so weiterzuentwickeln, daß der Einfluß des Be- und Entladeeffekts auf die Ausgangsgröße des Sensors möglicht eliminiert wird.

Diese Aufgabe wird durch die in dem kennzeichnenden Teil des Anspruchs 1 angegebenen Ausbildung der Achse bzw. des Drehbalkens über der Meßstelle erreicht.

Mit der erfindungsgemäßen Anordnung wird die Auswirkung der geringeren Krümmung der Biegelinie der Achse bzw. des Drehbalkens an dem inneren Sensorbefestigungspunkt gegenüber der größeren Krümmung der Biegelinie an einem äußeren Sensorbefestigungspunkt ausgeglichen.

Der Einfluß des Be- und Entladeeffekts auf die Messung des Gewichts und der Schwerpunktlage des Flugzeugs wird dadurch auch ausgeschaltet, wenn die Achse bzw. der Drehbalken nicht über der Meßstelle querschnittskonstant und symmetrisch zur Hochachse ist und wenn symmetrische Sensoren verwendet werden.

Als Sensor wird bevorzugt ein induktiver Sensor gemäß Anspruch 2 eingesetzt, der nach Anspruch 3 unsymmetrisch ist. Dieser Sensor weist ungleiche Abstände zwischen einer Mittellinie der beiden Spulen und einer Befestigungsstelle des die Spulen enthaltenden ersten Sensorteils einerseits sowie zwischen dieser Mittellinie und einer Befestigungsstelle des zweiten Sensorteils mit der Zunge andererseits auf.

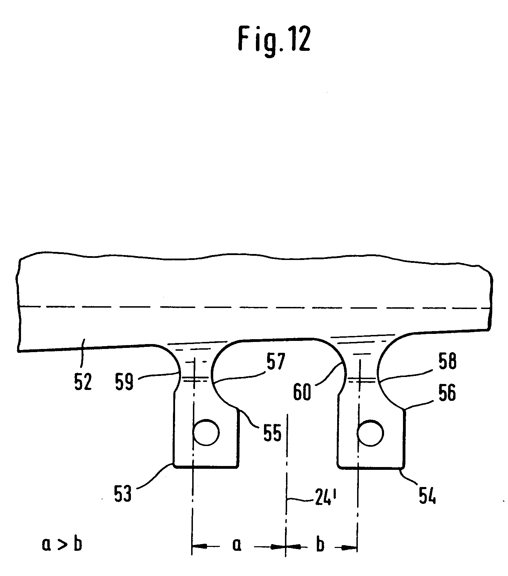

Die verschiedenen Aspekte der Erfindung werden im folgenden anhand einer Zeichnung mit elf Figuren erläutert, wobei lediglich die Ausführung nach Figur 12 beansprucht ist. Es zeigen:
- Fig. 1: eine Anordnung von vier Sensoren an einem Fahrwerk eines Flugzeugs, welches schematisch von oben gesehen dargestellt ist,
- Fig. 2: eine Anordnung und Ausbildung von Ansatzpaaren zur Befestigung von Sensoren an einer Achse, die von oben gesehen dargestellt ist,
- Fig. 3: einen Längsschnitt durch einen unsymmetrisch ausgebildeten Sensor,
- Fig. 4: eine elektrische Schaltungsanordnung des Sensors gemäß Fig. 3,
- Fig. 5: eine Biegelinie eines lediglich durch eine Kraft bzw. ein Gewicht F belasteten elastischen Körpers mit konstantem Querschnitt und Symmetrie zur Hochachse, wobei der Körper eine Achse oder einen Drehbalken eines Fahrwerks darstellt,
- Fig. 6: eine Biegelinie, die durch das Biegemoment aus einer Spuränderung der Achse nach Fig. 5 hervorgerufen ist,
- Fig. 7: ausschnittsweise eine von vorne gesehenen Achse eines Flugzeugs mit konisch ausgebildeten Halbachsen,
- Fig. 8: die zu einer Halbachse gehörende Biegelinie, die durch ein Biegemoment infolge Spuränderung erzeugt wird, mit Tangententeilstücken T₁ und T₂ zweier Hälften eines an der Achse angebrachten symmetrischen Sensors ,
- Fig. 9: eine der Biegelinie gemäß Fig. 8 entsprechende Biegelinie, jedoch mit einem unsymmetrischen Sensor,
- Fig.10: einen Ausschnitt aus einer erfindungsgemäß ausgebildeten Achse in einer Seitenansicht,
- Fig.11: einen Querschnitt durch den in Fig. 10 dargestellten Ausschnitt entlang der Ebene a-a und
- Fig.12: einen Ausschnitt aus einer erfindungsgemäß ausgebildeten Achse in einer Seitenansicht.

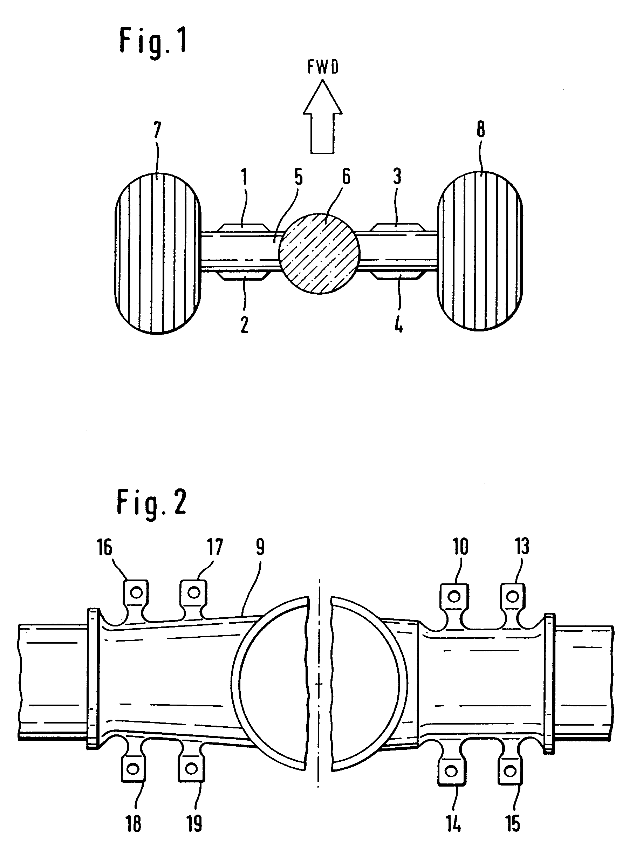

Fig. 1 zeigt eine Anordnung von vier Sensoren 1-4, und zwar an einer Achse 5 eines Flugzeugfahrwerks, welches über einen Öl-Stoßdämpfer 6, der im Querschnitt dargestellt ist, mit dem Flugzeug in Verbindung steht. Räder, die an der rohrförmig ausgebildeten Achse gelagert sind, tragen die Bezugszeichen 7,8. Die Sensoren 1,2 bzw. 3,4 sind paarweise zur hier nicht weiter interessierenden Kompensation eines Torsionsfehlers einander diametral gegenüberliegend an der Achse angeordnet. Sie befinden sich dabei in gleichem Abstand zu einem gedachten Mittelpunkt des Öl-Stoßdämpfers 6.

In Fig. 2 ist eine Achse 9 dargestellt, deren linker Teil in konventioneller Weise konisch ausgebildet ist, deren rechter Teil jedoch im Bereich von Ansätzen 10-15 zylindrisch ist. Die rechte zylindrische Ausbildung der Achse ist bevorzugt, da hier ein durch den Be- und Entladeeffekt bedingter Fehler bei Verwendung üblicher symmetrischer Sensoren, die an den Ansätzen 10,13 bzw. 14,15 angebracht sind, nicht auftritt. Jedoch ist oft nur der linke konische Teil der Achse realisierbar, da dieser Teil die vom Hersteller ursprünglich vorgesehenen Festigkeitseigenschaften aufweist. An den Ansätzen 16,17 bzw. 18,19 dieses Teils werden deswegen unsymmetrische Sensoren montiert, um den durch den Be- und Entladeeffekt bedingten Fehler zu vermeiden.

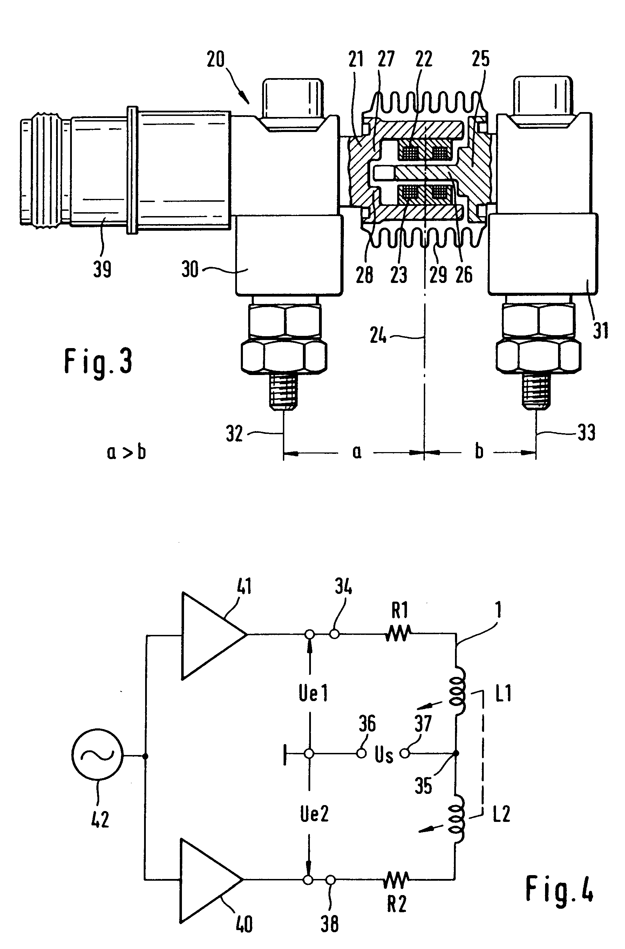

Fig. 3 zeigt einen allgemein mit 20 bezeichneten Sensor in einer Seitenansicht teilweise geschnitten. In einem gabelförmigen ersten Sensorteil 21 sind übereinander zwei waagerechte Spulen 22, 23 angeordnet. Eine durch diese Spulen hindurchgehende gemeinsame Mittellinie, die in den sensitiven Mittelpunkten der Spulen liegt, ist strichpunktiert angedeutet und trägt das Bezugszeichen 24. Ein zweiter, in den ersten Sensor teil hineinreichender Sensorteil 25 ist mit einer Zunge aus weichem ferromagnetischem Material 26 ausgestattet, die in einen Zwischenraum zwischen den beiden Spulen 22 und 23 in dem ersten Sensorteil hineinreicht. Die Zunge ist in diesem Raum in jeder Richtung beweglich, solange sie nicht an Anschläge 27, 28 anstößt. Der Innenraum des ersten und des zweiten Sensorteils ist durch einen beide Sensorteile miteinander verbindenden Balgen 29 gegenüber Umwelteinflüssen abgeschirmt. - Aus Fig. 3 geht ferner hervor, wie der erste Sensorteil 21 und der zweite Sensorteil 25 an jeweils einem Ansatz 30 bzw. 31 angeschraubt ist. Eine gedachte zentrale Befestigungstelle jeder dieser Schraubverbindungen ist strichpunktiert angedeutet und mit 32 bzw. 33 bezeichnet.

Der in Fig. 3 dargestellt Sensor ist unsymmetrisch ausgebildet, und zwar ist ein Abstand a zwischen der Befestigungsstelle 32 des ersten Sensorteils 21 und der Mittellinie 24 durch die beiden Spulen einerseits größer als ein Abstand b zwischen der Befestigungsstelle 33 des zweiten Sensorteils 25 und der Mittellinie 29 durch die beiden Spulen andererseits.

Alternativ dazu kann in einer anderen Ausführungsform auch der Abstand a kleiner sein als der Abstand b.

Die unsymmetrischen Sensoren sind bevorzugt zum Anbau an eine Achse bzw. an einen Drehbalken vorgesehen, der in üblicher Weise gemäß dem linken Abschnitt der Achse 9 in Fig. 2 konisch ausgebildet ist.

Bei rohrförmig bzw. als Hohlzylinder geformter Achse gemäß dem rechten Abschnitt der Achse 9 in Fig. 2 oder einem entsprechenden Drehbalken als Anbringungsort der Sensoren werden jedoch symmetrische Sensoren verwendet, bei denen die Abstände a und b untereinander gleich sind.

Unabhängig davon, ob es sich um einen symmetrischen oder einen unsymmetrischen Sensor handelt, bildet dieser Ausgangssignale nach dem Prinzip einer induktiven Spannungsteilung an den beiden in Reihe geschalteten Spulen 22 und 23 in Abhängigkeit von der Stellung der Zunge 26. Im einzelnen mißt der Sensor die vertikale Lage der Zunge 26 zwischen den beiden Spulen 22 und 23 bzw. einen Höhenversatz gegenüber der dargestellten mittleren Ausgangslage. Ein bloßes Schwenken der Zunge um einen gedachten Mittelpunkt, der in der Mittellinie 24 liegt, oder eine horizontale Verschiebung haben keinen Einfluß auf die Ausgangsgrößen des Sensors.

Der Sensor der in Fig. 3 dargestellten Bauart, ob unsymmetrisch oder symmetrisch, wird auch als Scherkraftsensor bezeichnet, weil er mit dem Höhenversatz der Zunge 26 gegenüber den Spulen 22 und 23 die Scherkraft mißt, die an der Achse oder dem Drehbalken auftritt, mit welcher der Sensor über die Ansätze 30 und 31 verbunden ist. Hingegen erfährt der Sensor keine Auslenkung, wenn die Achse oder der Drehbalken im Bereich der Ansätze keine Krümmung der neutralen Linie oder Biegelinie aufweist oder wenn die Krümmung gleichförmig oder mittensymmetrisch ist.

Eine Schaltungsanordnung, in der ein Sensor gemäß Fig. 3 angeordnet ist, zeigt Fig. 4. Hierin sind Anschlüsse mit 34,37, 38 bezeichnet, die in Fig. 3 in einer Anschlußdose 39 sitzen. In Fig. 4 ist der Sensor als Ersatzschaltbild dargestellt. Die wirksamen Induktivitäten der beiden an einem Punkt 35 zusammengeschalteten Spulen 22 und 23 in Fig. 3 sind mit L1 und L2 bezeichnet. Diese Induktivitäten sind durch die Zunge 26 gegenläufig beeinflußbar, was in Fig. 4 mit den durch eine unterbrochene Linie verbundenen Pfeilen angedeutet ist. R1 und R2 sind Ersatzwiderstände, welche die Ohm'schen Widerstände der Spulen 22 und 23 sowie deren Zuleitungen repräsentieren. Die beiden Spulen werden durch Verstärker 40 und 41, die von einer Wechselspannungsquelle 42 angesteuert werden, mit gegenphasigen Erregerspannungen Ue1 bzw. Ue2 beaufschlagt. Eine Ausgangsspannung oder Sensorspannung Us zwischen den Anschlüssen 36 und 37 ist ein Maß für die Verstellung der Zunge, welche den Betrag der Induktivitäten L1 und L2 beeinflußt.

Es werden im folgenden die mechanischen Aspekte der Erfindung besprochen, soweit diese für die Auslenkung der Sensorteile und zur Bildung des elektrischen Ausgangssignals des Sensors interessieren.

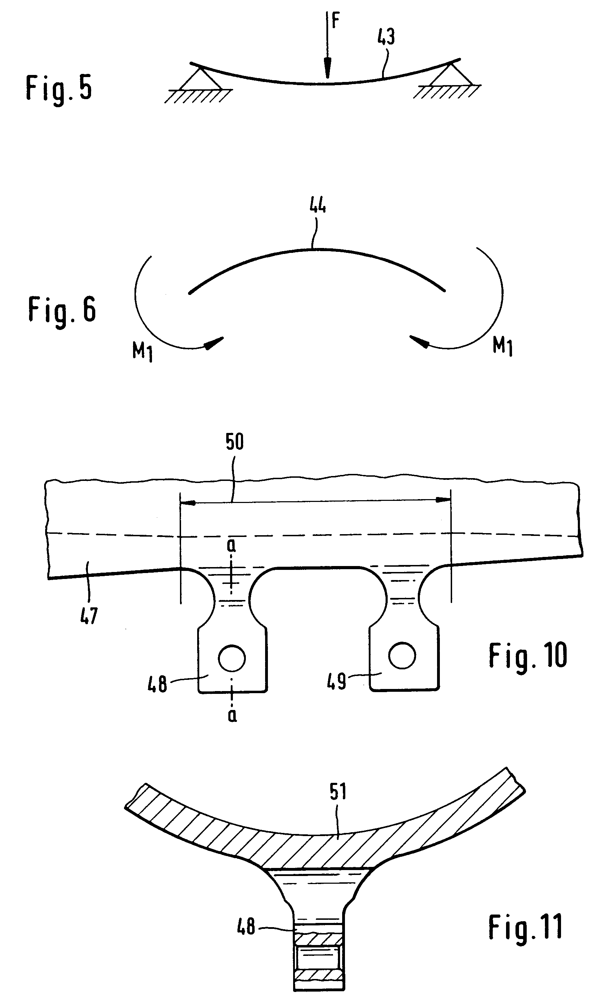

Es wird zunächst von dem ersten Aspekt der Erfindung ausgegangen, nämlich einer querschnittskonstanten und zur Hochachse symmetrischen Ausbildung der Achse über der Meßstelle. Eine solche rohrförmige Ausbildung ist zu der rechten Halbachse der Achse 9 in Fig. 2 gezeigt. Es hat sich herausgestellt, daß bei einer solchen Ausbildung der Achse bzw. Halbachse über der Meßstelle mit einem symmetrischen Sensor, bei dem also die Abstände a und b in Fig. 3 gleich sind, nur die durch das Gewicht hervorgerufene Verformung gemessen wird, nicht aber eine zusätzliche Komponente aufgrund des Be- und Entladeeffekts, die durch die Seitenkräfte an den nicht dargestellten Rädern hervorgerufen wird. Erläuternd ist hierzu in Fig. 5 dargestellt, wie ein senkrecht wirkendes Gewicht oder eine Kraft F auf eine beidseitig gelagerte Achse einwirkt, deren neutrale Linie oder Biegelinie mit 43 bezeichnet ist. Die Biegelinie ist eine kubische Parabel mit sich ständig ändernder Krümmung, die bedeutet, daß ein symmetrischer Sensor, der im Bereich dieser Biegelinie an der Achse angebracht ist, eine Auslenkung erfährt, welche wiederum ein der Kraft F proportionales Ausgangssignal bedeutet.

In Fig. 6 ist eine zugehörige Biegelinie 44 der gleichen Achse dargestellt, die durch das an den Rädern angreifende Paar Biegemomente M₁ hervorgerufen wird. Bei der beschriebenen Ausbildung der Achse als elastischer Körper mit konstantem Querschnitt und Symmetrie zur Hochachse, zum Beispiel einem Rohr, stellt die Biegelinie zwischen den Angriffspunkten der Momente einen Kreisausschnitt dar. Ein Sensor der beschriebenen symmetrischen Bauart, der im Bereich dieser Biegelinie an der Achse angebracht ist, erfährt keine Auslenkung. Dies bedeutet, daß der Be- und Entladeeffekt in das Ausgangssignal dieses Sensors nicht eingeht.

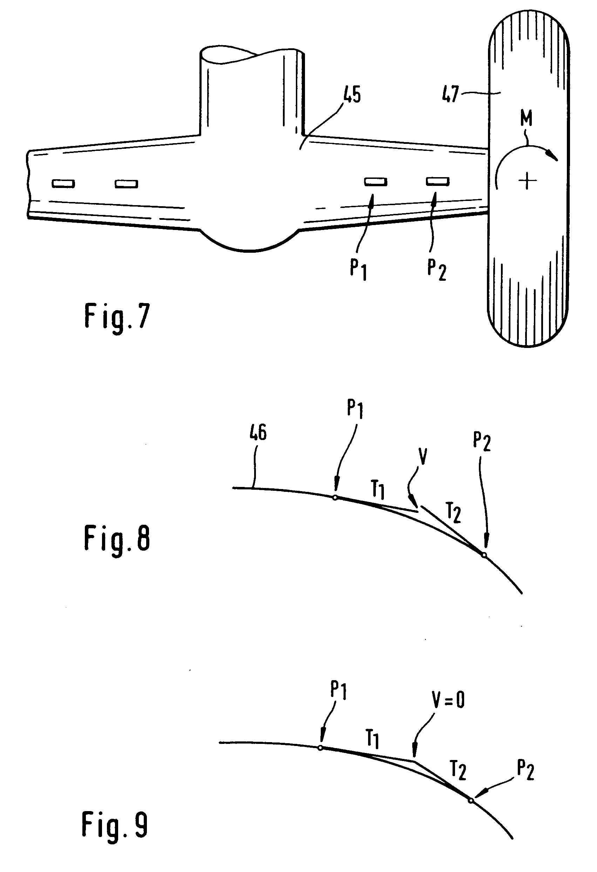

Nach dem zweiten Aspekt der Erfindung wird jedoch in dem induktiven Sensor der beschriebenen Bauart auch dann eine Auslenkung der beiden Sensorteile gegeneinander vermieden, wenn die Achse bzw. der Drehbalken, an dem der Sensor angebracht ist, nicht über der Meßstelle querschnittskonstant und zur Hochachse symmetrisch ist, indem ein unsymmetrischer Sensor eingesetzt wird, bei dem die Abstände a und b in Fig.3 also ungleich sind. Dies wird weiter anhand der Fig. 7 - 9 erläutert:

In Fig. 7 ist in einer Ansicht von vorne eine Achse 45 des Flugzeugs dargestellt, deren Halbachsen konisch geformt sind. Ein Paar Ansätze zur Montage eines Sensors ist mit P₁, P₂ bezeichnet.

In Fig. 8 ist eine zu einer Halbachse der Achse 45 gehörende Biegelinie 46 dargestellt, die lediglich durch ein Momentenpaar M, welches an Rädern - bezeichnet ist ein Rad 47 in Fig. 7 -hervorgerufen wird. Das Drehmomentenpaar M steht dabei für den Be- und Entladeeffekt, welcher das Gewichtsmeßergebnis zu verfälschen sucht. Wenn an den Ansätzen P₁, P₂ ein symmetrischer Sensor, bei dem also die Abstände a und b in Fig. 3 gleich sind, montiert ist, bedeutet dies, daß ein inneres Tangententeilstück T₁ infolge der geringeren Krümmung der Halbachse der Achse 45 in dem inneren Bereich weniger ausgelenkt wird als ein äußeres Tangententeilstück T₂. Die Tangententeilstücke verlaufen dabei zwischen je einem der Ansätze P₁ und P₂, an denen eines der Sensorteile angebracht ist, und dem Ende dieses Sensorteils an der Mittellinie, die zentral durch die beiden Spulen geht. Wie aus Fig. 8 ersichtlich, sind die im Bereich der Mittellinie liegenden Enden der Tangententeilstücke T₁ und T₂ um einen Versatz V gegeneinander versetzt, der ein falsches Ausgangssignal des Sensors hervorruft.

Wenn jedoch der Sensor unsymmetrisch ausgebildet ist, mit ungleichen Abständen a und b gemäß Fig. 3, und diese Abstände in geeigneter Weise so bemessen sind, daß die unterschiedlichen Krümmungen an dem inneren Befestigungspunkt bzw. Ansatz P₁ und dem äußeren Befestigungspunkt bzw. Ansatz P₂ die gleichen Auslenkungen der diesen Befestigungspunkten entgegengesetzten Enden der Tangententeilstücke hervorrufen, so wird der Versatz V der Enden dieser beiden Tangententeilstücke zu Null. Ein solcher unsymmetrischer Sensor erfährt also keine das Gewichtsmeßergebnis verfälschende Auslenkung, die von einem Drehmoment infolge der Seitenkräfte an den Rädern herrührt.

In Fig. 10 ist ein Achsenausschnitt 47 in dem Bereich von Ansätzen 48 und 49 dargestellt. Zum Vermeiden des Be- und Entladeeffekts bei der Gewichtsmessung genügt es, daß der Abschnitt 50 über der durch die Ansätze 48, 49 gegebenen Meßstelle zylindrisch ausgebildet ist. Außerhalb dieses Abschnitts 50 kann die Achse konisch sein.

Fig. 11 zeigt einen zugehörigen rohrförmigen Querschnittsausschnitt 51 teilweise in der Ebene a-a, die in Fig. 10 innerhalb des Abschnitts 50 angedeutet ist.

In Fig. 12 ist ein ähnlicher Achsenausschnitt 52 wie der Achsenausschnitt 47 in Fig. 10 dargestellt, wobei jedoch Ansätze 53, 54 des Achsenausschnitts 52 im Unterschied zu den Ansätzen 48, 49 des Achsenausschnitts 47 unsymmetrisch ausgebildet sind, wie weiter erläutert wird: Die Unsymmetrie besteht darin, daß die Ansätze auf jeweils einer äußeren Seite 55 bzw. 56 tiefere Verjüngungen bzw. Hinterschneidungen 57, 58 aufweisen als flachere Hinterschneidungen 59, 60 auf den entgegengesetzten nicht bezeichneten inneren Seiten der Ansätze. Demzufolge ist ein Abstand a zwischen einer Mittellinie durch den verjüngten Teil des Ansatzes 53 und einer Mittellinie 24′ zwischen beiden Ansätzen größer als ein Abstand b zwischen dieser Mittelinie 24′ und einer Mittellinie durch den verjüngten Abschnitt des Ansatzes 54. Mit der gleichen Kennzeichnung der Abstände a, b, wie in Fig. 3, ist angedeutet, daß in der Alternative gemäß Fig. 12 im Ergebnis das gleiche Resultat auf den Versatz zwischen den Enden des ersten Sensorteils und des zweiten Sensorteils eintritt, von denen je einer an dem Ansatz 57 bzw. 58 befestigt wird, wie zu Fig. 3 erläutert, obwohl in der Ausführungsform nach Fig. 12 die Sensorteile eines symmetrischen induktiven Sensors an den Ansätzen 53, 54 angebracht sind im Unterschied zu dem unsymmetrischen Sensor gemäß Fig. 3.

## Patentansprüche

1. Anordnung mindestens eines Sensors symmetrischer Bauart an dem Fahrwerk eines Flugzeugs zur Messung von Gewicht und Schwerpunktlage des Flugzeugs, wobei der Sensor zur Messung der Scherung an einer durch ein Paar Ansätze an einer Achse oder einem Drehbalken, auch bogie beam genannt gebildeten Meßstelle angebracht ist,
**dadurch gekennzeichnet,**
daß bei einer über der Meßstelle nicht querschnittskonstanten und zur Hochachse, symmetrischen Ausbildung der Achse oder des Drehbalkens die Ansätze (53, 54) mit ungleichen Hinterschneidungen (57 - 60) ausgebildet sind, dergestalt, daß die Hinterschneidungen (57, 58) auf einer äußeren Seite (55, 56) tiefer in die Ansätze hineinreichen als Hinterschneidungen (59, 60) auf der jeweils entgegengesetzten inneren Seite der Ansätze.

2. Anordnung nach Anspruch 1,
**dadurch gekennzeichnet**,
daß als Sensor ein induktiver Sensor der Bauart mit zwei in Reihe geschalteten Spulen (22,23) in einem ersten Sensorteil (21) sowie mit einer in den Spulen beweglichen Zunge (26) aus ferrmagnetischem Material, die Bestandteil des zweiten Sensorteils (25) ist, vorgesehen ist.

3. Anordnung nach Anspruchen 2,
**dadurch gekennzeichnet**,
daß ein Sensor unsymmetrischer Bauart ungleiche Abstände (a, b) zwischen einer Mittellinie (24) der beiden Spulen (22,23) und einer Befestigungsstelle (32) des die Spulen enthaltenden ersten Sensorteils (21) einerseits sowie zwischen dieser Mittellinie (24) und einer Befestigungsstelle (33) des zweiten Sensorteils (25) mit der Zunge (26) andererseits aufweist.

4. Anordnung nach einem der Ansprüche 1 oder 2,
**dadurch gekennzeichnet,**
daß der Sensor symmetrischer Bauart jeweils gleiche Abstände (a, b) zwischen einer Mittellinie der beiden Spulen und einer Befestigungsstelle des ersten Sensorteils einerseits sowie zwischen dieser Mittellinie und einer Befestigungsstelle des zweiten Sensorteils andererseits aufweist.

## Claims

1. Arrangement of at least one sensor of symmetrical design on the undercarriage of an aircraft to measure the weight of the aircraft and the position of its centre of gravity, the sensor being mounted to measure the shear action at a measurement point constituted by a pair of lugs on an axle or a bogie beam,
characterised in that the axle or the bogie beam not being constant in cross-section over the measurement point and being symmetrical to the vertical axis, the lugs (53, 54) are constructed with unequal undercuts (57 - 60), in such a manner that the undercuts (57, 58) extend deeper into the lugs on an outer face (55, 56) than undercuts (59, 60) on the respective opposing inner face of the lugs.

2. Arrangement according to claim 1, characterised in that as the sensor there is provided an inductive sensor of the design incorporating two coils (22, 23) connected in series in a first sensor portion (21) and incorporating a tongue (26) of ferromagnetic material which is adapted to move in the coils and forms part of the second sensor portion (25).

3. Arrangement according to claim 2, characterised in that a sensor of asymmetrical design features unequal distances (a, b) between, firstly, a median line (24) in respect of the two coils (22, 23) and an attachment point (32) in respect of the first sensor portion (21) containing the coils, and, secondly, between said median line (24) and an attachment point (33) in respect of the second sensor portion (25) with the tongue (26).

4. Arrangement according to either of claims 1 and 2, characterised in that the sensor of symmetrical design in each case features equal distances (a, b) between, firstly, a median line in respect of the two coils and an attachment point in respect of the first sensor portion, and, secondly, between said median line and an attachment point in respect of the second sensor portion.

## Revendications

1. Dispositif comportant au moins un détecteur ou capteur monté symétriquement sur le train d'atterrissage d'un avion pour mesurer le poids et la position du centre de gravité de l'avion, le capteur étant monté, pour mesurer le cisaillement, en une position de mesure formée par une paire d'appendices sur un axe ou sur un balancier ou pivotant ("bogie beam"), dispositif caractérisé en ce que, dans le cas d'une réalisation des axes ou du balancier ou pivotant ne présentant pas une section constante sur la position de mesure et dans le cas d'une exécution de ces axes ou du pivotant symétrique par rapport à l'axe vertical, les appendices (53, 54) comportent des détalonnages (57-60) qui ne sont pas identiques ; en ce que les détalonnages (57, 58) réalisés sur un côté extérieur (55, 56) pénètrent plus profondément dans les appendices que les détalonnages (59, 60) réalisés sur le côté intérieur chaque fois opposé des appendices.

2. Dispositif selon la revendication 1, caractérisé en ce qu'on prévoit, comme détecteur ou capteur,un capteur inductif du genre comportant deux bobines (22, 23) montées en série dans une première partie (21) du capteur ainsi qu'une lame (26) en un matériau ferromagnétique, mobile dans les bobines et qui fait partie de la seconde partie (25) du capteur.

3. Dispositif selon la revendication 1, caractérisé en ce qu'un détecteur ou capteur de structure asymétrique présente des distances (a, b) inégales entre une ligne médiane ou axe de symétrie (24) des deux bobines (22, 23) et une position de fixation (32) de la première partie du capteur (21) contenant les bobines, d'une part, ainsi qu'entre cet axe de symétrie (24) et une position de fixation (33) de la seconde partie (25) du capteur comportant la lame (26), d'autre part.

4. Dispositif selon la revendication 1 ou 2, caractérisé en ce que le capteur, de structure symétrique, présente à chaque fois des distances (a, b) égales entre une ligne médiane ou axe de symétrie des deux bobines et une position de fixation de la première partie du capteur, d'une part, ainsi qu'entre cet axe de symétrie et une position de fixation de la seconde partie du capteur, d'autre part.
